(19) Europäisches Patentamt
European Patent Office
Office européen des brevets

(11) Veröffentlichungsnummer: **0 214 445**
**B1**

(12) **EUROPÄISCHE PATENTSCHRIFT**

(45) Veröffentlichungstag der Patentschrift: **06.02.91**

(21) Anmeldenummer: **86110549.2**

(22) Anmeldetag: **30.07.86**

(51) Int. Cl.$^5$: **C 09 B 29/033**, C 09 B 29/42, D 06 P 1/18

(54) **Heterocyclische Azofarbstoffe.**

(30) Priorität: **10.08.85 DE 3528759**

(43) Veröffentlichungstag der Anmeldung:
**18.03.87 Patentblatt 87/12**

(45) Bekanntmachung des Hinweises auf die Patenterteilung:
**06.02.91 Patentblatt 91/06**

(84) Benannte Vertragsstaaten:
**CH DE FR GB IT LI**

(56) Entgegenhaltungen:
**FR-A-2 118 075**
**FR-A-2 169 346**
**FR-A-2 184 828**
**FR-A-2 190 883**
**FR-A-2 212 389**
**FR-A-2 219 205**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft**
**Carl-Bosch-Strasse 38**
**D-6700 Ludwigshafen (DE)**

(72) Erfinder: **Dehnert, Johannes, Dr.**
**Ottweilerstrasse 2**
**D-6700 Ludwigshafen (DE)**
Erfinder: **Lamm, Gunther, Dr.**
**Heinrich-Heine-Strasse 7**
**D-6733 Hassloch (DE)**
Erfinder: **Loeffler, Hermann**
**Haydnstrasse 23**
**D-6720 Speyer (DE)**

**EP 0 214 445 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

**Beschreibung**

Die Erfindung betrifft Farbstoffe der Formel I

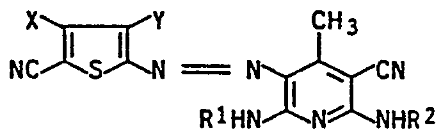

(I),

in der

X Wasserstoff, Methyl oder Phenyl,

Y Cyan oder Carbonester und

$R^1$ und $R^2$ unabhängig voneinander gegebenenfalls durch Sauerstoff unterbrochenes und gegebenenfalls durch Hydroxi, $C_1$- bis $C_8$-Alkanoyloxi, $C_1$- bis $C_4$-Alkoxi, Benzyloxi oder Phenoxi substituiertes $C_2$- bis $C_8$-Alkyl, gegebenenfalls durch Methyl oder Methoxi substituiertes Phenyl oder Cyclohexyl oder einer der beiden Reste $R^1$ und $R^2$ auch Wasserstoff bedeuten.

Carbonestergruppen Y sind vorzugsweise:

$COOCH_3$, $COOC_2H_5$, $COOC_3H_7$, $COOC_4H_9$ und $COOC_2H_4OCH_3$.

Reste $R^1$ und $R^2$ sind z.B. neben Wasserstoff:

1. Gegebenenfalls substituierte Alkylreste, wie

$C_2H_5$, $C_3H_7$-(n),

$CH_3$ (above $CH$-$C_2H_5$)

$CH(CH_3)_2$, $C_4H_9$-(n), $CH_2$—$CH(CH_3)_2$, $CH$—$C_2H_5$, $C_5H_{11}$-(n), $CH$—$CH(CH_3)_2$,

$CH_3$ (below $CH$—$CH(CH_3)_2$)

$CH_3$ (above $CH$—$C_3H_7$); $CH_3$ (above $C$ of $CH_2$—$C$—$CH_3$)

$CH(C_2H_5)_2$, $CH$—$C_3H_7$, $CH$—$CH$—$CH_3$, $C_2H_4$—$CH(CH_3)_2$, $CH_2$—$C$—$CH_3$, $C_6H_{13}$, $C_7H_{15}$,

$CH_3$ $CH_3$ (below $CH$—$CH$—$CH_3$); $CH_3$ (below $C$ of $CH_2$—$C$—$CH_3$)

$CH$—$C_4H_9$, $CH(C_3H_7)_2$, $CH$ /$CH(CH_3)_2$ \\$CH(CH_3)_2$, $CH$—$C_2H_4$—$CH(CH_3)_2$, $C_8H_{17}$, $CH_2$—$CH$—$C_4H_9$

$C_2H_5$ (below $CH$—$C_4H_9$); $CH_3$ (below $CH$—$C_2H_4$—$CH(CH_3)_2$); $C_2H_5$ (below $CH$ of $CH_2$—$CH$—$C_4H_9$)

und $CH$—$C_3H_6$—$CH(CH_3)_2$.

$CH_3$

$CH_3$ (above $CH$—$C_2H_4$—OH); $C_2H_5$ (above $CH$—$CH_2$—OH)

$C_2H_4OH$, $C_3H_6OH$, $CH_2$—$CH$—OH, $CH$—$CH_2$—OH, $C_4H_8OH$, $CH$—$C_2H_4$—OH, $CH$—$CH_2$—OH,

$CH_3$ (below $CH_2$—$CH$—OH); $CH_3$ (below $CH$—$CH_2$—OH)

$C_6H_{12}OH$, $CH$—$C_3H_6C(CH_3)_2$;

$CH_3$ OH

$C_2H_4OCH_3$, $C_2H_4OC_2H_5$, $C_2H_4OC_3H_7$, $C_2H_4OC_4H_9$, $C_2H_4OC_6H_5$, $C_3H_6OCH_3$,

$C_3H_6OC_2H_5$, $C_3H_6OC_3H_7$, $C_3H_6OC_4H_9$, $C_3H_6OCH_2C_6H_5$,

$C_3H_6OC_2H_4OC_6H_5$, $C_3H_6OC_6H_5$, $C_3H_6OC_2H_4OH$,

$C_3H_6OC_4H_8OH$, $C_3H_6OC_2H_4OCH_3$, $C_3H_6OC_2H_4OC_2H_5$, $C_3H_6OC_2H_4OCH(CH_3)_2$,

$C_3H_6OC_2H_4OC_4H_9$, $C_3H_6OC_2H_4OCH_2C_6H_5$, $C_3H_6OC_2H_4OC_6H_5$, $C_3H_6OC_4H_8OCH_3$,

$C_3H_6OC_4H_8OC_2H_5$, $C_3H_6OC_4H_8OC_4H_9$, $CH$—$CH_2OCH_3$, $CHCH_2OC_4H_9$, $CH$—$CH_2OC_6H_5$

$CH_3$ $CH_3$ $CH_3$

$CHCH_2OCH_2C_6H_5$, $CH$—$C_2H_4OCH_3$, $CH$—$CH_2$—$OCH_3$, $CH$—$CH(OCH_3)_2$, $CH_2CHOCH_3$,

$CH_3$ $CH_3$ $C_2H_5$ $CH_3$ $CH_3$

$CH_2$—$CH$—$OC_2H_5$, $CH_2$—$CH$—$OC_4H_9$ oder $CH_2$—$CH$—$OC_6H_5$

$CH_3$ $CH_3$ $CH_3$

sowie die entsprechenden Reste, in denen die Gruppierungen

$C_2H_4O$, $C_3H_6O$, 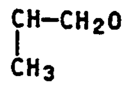 oder 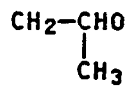

zweimal vorhanden sind; weiterhin

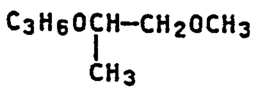, 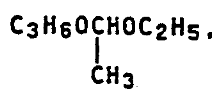, 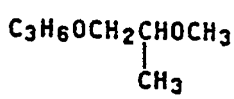,

$(CH_2)_2OCHO$, $(CH_2)_2OCO(CH_2)_nCH_3$, $(C_2H_4O)_2CHO$,

$(C_2H_4O)_2CO(CH_2)_nCH_3$, $(CH_2)_3O(CH_2)_2OCHO$, $(CH_2)_3O(CH_2)_2OCO(CH_2)_nCH_3$,

$(CH_2)_2O(CH_2)_4OCHO$, $(CH_2)_2O(CH_2)_4OCO(CH_2)_nCH_3$, wobei n die Zahlen 0 bis 7 bedeutet, oder 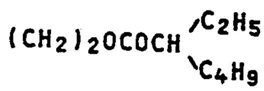.

2. Gegebenenfalls substituierte Cyclohexylreste:

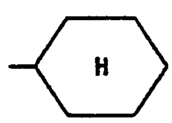 oder 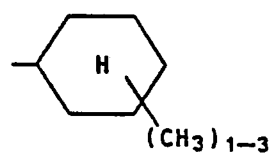,

3. Gegebenenfalls substituierte Phenylreste:

$C_6H_5$, $C_6H_4CH_3$,

$C_6H_3(CH_3)_2$, $C_6H_4OCH_3$ oder $C_6H_3(OCH_3)_2$.

Zur Herstellung der Verbindungen der Formel I kann man eine Diazoniumverbindung von Aminen der Formel

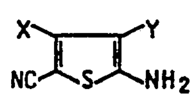

mit Kupplungskomponenten der Formel

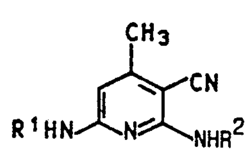

in an sich bekannter Weise umsetzen. Einzelheiten der Herstellung können den Beispiel entnommen werden, in denen sich Angaben über Teile und Prozente, sofern nicht anders vermerkt, auf das Gewicht beziehen. Die λ max-Werte wurden in einem Gemisch aus Dimethylformamid und Eisessig im Verhältnis 9:1 bestimmt.

Die Verbindungen der Formel I ergeben insbesondere auf Polyester farbstarke, brillante und hochlichtechte Färbungen. Ebenfalls eignen sie sich hervorragend zum Färben von Thermoplasten, wie Polystyrol, Polymethacrylat, Polycarbonat, Polyamid und Styrol/Acrylsäure/Butadien-Copolymerisaten, da sie sich durch hohe Farbstärke, Licht- und Temperaturbeständigkeit auszeichnen. Gleichermaßen sind viel erfindungsgemäße Farbstoffe zum Färben und/oder Bedrucken von Polyester-Baumwolle-Mischungen mit hohen Licht- und Waschechtheiten gemäß dem Verfahren der DE—PS 18 11 796 brauchbar.

Bevorzugte Carbonestergruppen sind $COOCH_3$ und $COOC_2H_5$.

Für $R^1$ und $R^2$ sind beispielsweise besonders bevorzugt: die Reste

$C_2H_5$, $C_3H_7$, $C_4H_9$, $CH_2CH\begin{smallmatrix}C_2H_5\\C_4H_9\end{smallmatrix}$, $C_6H_{11}$, $C_6H_5$, $C_6H_4CH_3$, $C_6H_4OCH_3$, $C_2H_4OH$,

$C_3H_6OH$, $C_2H_4OCH_3$, $C_3H_6OCH_3$, $C_2H_4OC_2H_5$, $C_2H_4OC_4H_9$, $C_3H_6OC_2H_5$, $C_2H_4OC_2H_4OH$,

$C_3H_6OC_2H_4OH$, $C_3H_6OC_4H_8OH$, $C_3H_6OC_2H_4OCH_3$, $C_3H_6OC_2H_4OC_2H_5$, $C_3H_6OC_2H_4OC_4H_9$,

$C_3H_6OC_4H_8OC_2H_5$, $C_3H_6OC_4H_8OC_4H_9$, $C_2H_4OC_2H_4OCO(CH_2)_mCH_3$,

$C_3H_6OC_2H_4OCO(CH_2)_mCH_3$, $C_3H_6OC_4H_8OCO(CH_2)_mCH_3$, $C_2H_4OCO(CH_2)_mCH_3$,

$C_3H_6OCO(CH_2)_mCH_3$, $C_3H_6OCH_2C_6H_5$ oder $C_3H_6OC_2H_4OC_6H_5$,

wobei m die Zahlen 1—4 bedeutet.

Besonders bevorzugte Kombinationen für $R^1$ und $R^2$ sind z.B.:

$C_2H_4OC_2H_4OCOCH_3$, $C_2H_4OC_2H_4OCOC_2H_5$, $C_3H_6OC_4H_8OH$, $C_3H_6OC_4H_8OCOCH_3$,

$C_3H_6OC_4H_8OCOC_2H_5$, $C_3H_6OC_2H_4OCH_3$, $C_3H_6OC_2H_4OC_2H_5$, $C_3H_6OC_2H_4OC_4H_9$,

$C_3H_6OC_4H_8OC_2H_5$, $C_3H_6OC_4H_8OC_4H_9$, $C_3H_6OCH_2C_6H_5$

oder $C_3H_6OC_2H_4OC_6H_5$ sowie $C_2H_5$, $C_2H_4OCH_3$, $C_3H_6OCH_3$, $CH(CH_3)_2$ oder $C_4H_9$

in Kombination mit $C_2H_4OC_2H_4OCOCH_3$, $C_3H_6OC_4H_8OH$, $C_3H_6OC_4H_8OCHO$,

$C_3H_6OC_4H_8OCOCH_3$, $C_3H_6OC_4H_8OCOC_2H_5$, $C_3H_6OC_2H_4OC_4H_9$, $C_3H_6OC_4H_8OC_2H_5$,

$C_3H_6OC_4H_8OC_4H_9$ oder $C_3H_6OC_2H_4OC_6H_5$ und weiterhin $C_2H_4OH$, $C_3H_6OH$,

$C_2H_4OCOCH_3$, $C_2H_4OCOC_2H_5$, $C_3H_6OCOCH_3$ oder $C_3H_6OCOC_2H_5$ kombiniert mit

$C_3H_6OC_2H_4OCH_3$, $C_3H_6OC_2H_4OC_2H_5$, $C_3H_6OC_2H_4OC_4H_9$, $C_3H_6OC_4H_8OC_2H_5$,

$C_3H_6OC_4H_8OC_4H_9$, $C_6H_4OCH_3$ oder $C_6H_5$.

Von besonderer Bedeutung ist auch das Verfahren zur Herstellung der nebenproduktfreien durch Acyloxialkyl- oder Acyloxialkoxialkylreste substituierten 2,6-Diaminopyridine.

Die Herstellung dieser Kupplungskomponenten erfolgt durch Zugabe einer wenigstens äquivalenten Menge Schwefelsäure zu einer Lösung oder Suspension des hydroxygruppenhaltigen substituierten Pyridins in der gewünschtem organischen Säure und Rühren bei 20 bis 100°C, vorzugsweise bei 20 bis 50°C. Der Acylierungsgrad ist vom Wassergehalt abhängig und erreicht in wasserfreim Medium 100%. Wasserfreiheit und 100 %iger Umsatz sind jedoch nicht in jedem Fall zur Erzielung optimaler färberischer Eigenschaften notwendig. In den meisten Fällen genügt eine Umsetzungsrate von 70 bis 90%, die Wasserfreiheit nicht voraussetzt und bei der sich die Acylierung vorteilhaft mit der Herstellung des Hydroxialkylaminopyridins verbinden läßt.

Bei den Kupplungskomponenten handelt es sich in der Regel um Isomerengemische, bei denen die Substituenten in 2,6-Stellung jeweils vertauscht sind, allerdings liegen abhängig von der Herstellung unterschiedliche Mengen der Isomeren vor.

Aus der FR—A—2 219 205 und der FR—A—2 212 389 sind Azofarbstoffe bekannt, deren Diazokomponente aus der Thiophenreihe und deren Kupplungskomponente aus der Diaminopyridinreihe stammen. Diese Farbstoffe weisen jedoch ein anderes Substitutionsmuster auf.

Die FR—A—2 118 075 beschreibt u.a. einen Farbstoff, dessen Kupplungskomponente 2-Benzylamino-6-(2-hydroxyethylamino)-3-cyano-4-methylpyridin und dessen Diazokomponente 2-Amino-3-cyano-4-methyl-5-methoxycarbonylthiophen ist. Es hat sich jedoch gezeigt, daß dieser Farbstoff anwendungstechnische Mängel aufweist.

Beispiel 1

16,3 Teile 2-Amino-3,5-dicyan-4-methyl-thiophen werden in 250 Teilen 65 %iger Schwefelsäure unter Kühlung aufgelöst. Dazu tropft man unter weiterer Kühlung bei 0 bis +5°C 31,5 Teile Nitrosylschwefelsäure (40 %ig) und rührt 1 1/2 Stunden bei dieser Temperatur nach.

Die eingesetzte Kupplungskomponente ist wie folgt erhalten worden: Ein Gemisch aus 17 Teilen wasserfeuchtem (ber. trocken) 2-Chlor-3-cyan-4-methyl-6-aminopyridin (erhalten z.B. nach dem in der DE—PS 2260827 beschriebenen Verfahren), 20 Volumenteilen Isobutanol, 18 Teilen 3-Aminopropyl-4-hydroxibutylether und 8 Teilen Soda wird am absteigenden Kühler unter guter Rührung 5 Stunden auf 145/150°C erhitzt, bis ein Dünnschichtchromatogramm vollständige Umsetzung anzeigt. Nach dem Abkühlen auf ungefähr 100°C wurden dann 35 Teile Essigsäure und bei 35/40°C unter weiterer leichter Kühlung 15 Teile 96 %ige Schwefelsäure zugetropft. Nach dreistündigem Rühren waren dann ca. 92% der Hydroxiverbindung acetyliert. In die gut gerührte Mischung aus 100 Teilen der so erhaltenen Kupplungskomponenten, 300 Teilen Eis und 100 Teilen Wasser läßt man die Lösung des Diazoniumsalzes einlaufen und rührt ca. zwei Stunden bei 0/5°C nach, bis es verbraucht ist. Danach wird das Kupplungsgemisch abgesaugt, das Filtergut neutral gewaschen und bei 80°C getrocknet.

Das dunkelgrüne Pulver (λmax = 527 in DMF/Essigsäure 9:1) entspricht zu ~ 80% der Formel

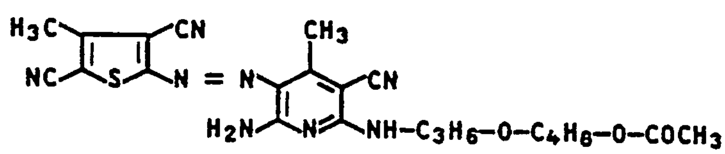

und enthält noch ~ 20% der nicht acetylierten Hydroxiverbindung. Das Farbstoffgemisch hat sehr gute färberische Eigenschaften und ergibt auf Polyester brillante Rotfärbungen mit sehr hohen Licht- und Bügelechtheiten.

Beispiel 2

Wird unter den Herstellungsbedingungen des Beispiels 1 die äquivalente Menge der nachfolgend beschriebenen Kupplungskomponente verwendet, so erhält man den Rotfarbstoff (λmax = 537,8 nm in DMF/Essigsäure 9:1) der Formel

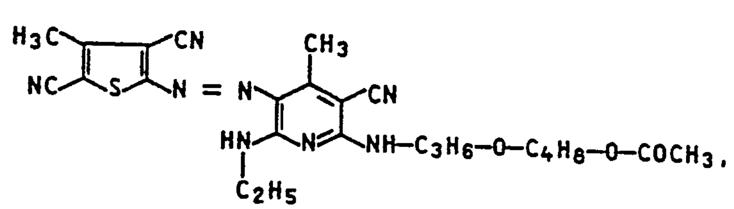

der noch ca. 20% der Hydroxiverbindung enthält und Polyester in brillanten blaustichigen Rottönen färbt. Die Färbungen sind hoch licht- und bügelecht.

Die Kupplungskomponente wurde wie folgt erhalten: 20 Teile 2-Chlor-3-cyan-4-methyl-6-ethylaminopyridin (erhalten gemäß DE—PS 2260827) werden in 20 Raumteilen Isobutanol mit 18 Teilen 3-Aminopropyl-4-hydroxi-butylether und 10,5 Teilen Soda unter Abdestillieren von Isobutanol und Wasser auf 145°C erhitzt und 4 Stunden bei 145/150°C nachgerührt bis ein DC vollständige Umsetzung anzeigt. Während des Abkühlens ab etwa 100°C tropft man 30 Raumteile Eisessig und bei 40°C unter Wasserkühlung 15 Teile 96 %ige Schwefelsäure ein. Durch dreistündiges Rühren bei 40°C wird eine Umsetzungsrate von ca. 93% erreicht.

In vergleichbarer Weise wurden die Farbstoffe der nachfolgenden Tabellen erhalten, die sich ebenso durch sehr hohe Lichtechtheit und Temperaturstabilität auszeichnen.

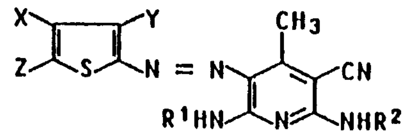

| Bsp.-Nr. | X | Y | Z | $R^1$ | $R^2$ | λ max nm |
|---|---|---|---|---|---|---|
| 3 | $CH_3$ | CN | CN | H | $C_3H_6OC_4H_8OCOCH_3$<br>$C_3H_6OC_2H_4O$— 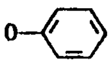 | 526 |
| 4 | $CH_3$ | CN | CN | H | $C_3H_6OC_4H_8OCOC_2H_5$ | 527 |
| 5 | $CH_3$ | CN | CN | H | $C_3H_6OC_4H_8OCOCH_2CH(CH_3)_2$ | 527,5 |
| 6 | $CH_3$ | $COOC_2H_5$ | CN | H | $C_3H_6OC_4H_8OCOCH_3$ | 518 |
| 7 | $CH_3$ | $COOC_2H_5$ | CN | H | $C_3H_6OC_4H_8OCH_2CH(CH_3)_2$ | 518,5 |
| 8 | $CH_3$ | CN | CN | H | $C_3H_6OC_2H_4OCH_3$ | 528,5 |
| 9 | $CH_3$ | CN | CN | H | $C_3H_6OC_2H_4OC_2H_5$ | 523 |
| 10 | $CH_3$ | CN | CN | H | $C_3H_6OC_2H_4OC_4H_9$ | 523 |
| 11 | $CH_3$ | $COOC_2H_5$ | CN | H | $C_3H_6OC_4H_8OC_2H_5$ | 521,2 |
| 12 | $CH_3$ | $COOCH_3$ | CN | H | $C_3H_6OC_4H_8OC_4H_9$ | 520,2 |
| 13 | $CH_3$ | $COOC_2H_5$ | CN | H | $C_3H_6OC_4H_8OC_4H_9$ | 520 |
| 14 | $CH_3$ | $COOC_2H_5$ | CN | H | $C_3H_6OC_2H_4OC_4H_9$ | 522,7 |
| 15 | $CH_3$ | $COOC_3H_7$ | CN | H | $C_3H_6OC_2H_4OCH_3$ | 523,2 |
| 16 | $CH_3$ | CN | CN | H | $C_3H_6OC_4H_8OCOCH_3$<br>$C_3H_6OC_2H_4OC_4H_9$ | 525 |
| 17 | $CH_3$ | CN | CN | $C_2H_4OCH_3$ | $C_3H_6OC_4H_8OH$ | 534,3 |
| 18 | $CH_3$ | CN | CN | $C_2H_4OCH_3$ | $C_3H_6OC_4H_8OCOCH_3$ | 535,8 |
| 19 | $CH_3$ | CN | CN | $C_2H_4OCOCH_3$ | $C_3H_6OC_2H_4OC_2H_5$ | 535,3 |
| 20 | $CH_3$ | CN | CN | $C_2H_4OH$ | $C_3H_6OC_2H_4OC_2H_5$ | 535,8 |

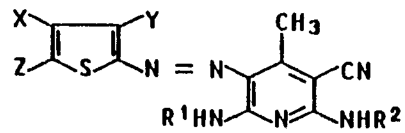

| Bsp.-Nr. | X | Y | Z | $R^1$ | $R^2$ | λ max nm |
|---|---|---|---|---|---|---|
| 21 | $CH_3$ | CN | CN | $C_2H_4OCOCH_3$ | $C_2H_4OC_2H_5$ | 533,8 |
| 22 | $CH_3$ | CN | CN | $C_3H_6OCH_3$ | $C_3H_6OC_2H_4OC_4H_9$ | 537,8 |
| 23 | $CH_3$ | CN | CN | $C_3H_6OCH_3$ | $C_3H_6OC_4H_8OH$ | 536,3 |
| 24 | $CH_3$ | $COOC_2H_5$ | CN | $C_3H_6OH$ | 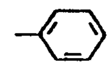 | 542 |
| 25 | $CH_3$ | $COOC_2H_5$ | CN | $C_3H_6OCOCH_3$ | 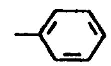 | 541,3 |
| 26 | $CH_3$ | $COOC_2H_5$ | CN | H | $C_3H_6OCH_2-CH$ $C_2H_5$ $C_4H_9$ | 524 |
| 27 | $CH_3$ | CN | CN | H | $C_3H_6OC_4H_8OC_2H_5$ | 525,3 |
| 28 | $CH_3$ | CN | CN | H | $C_3H_6OC_4H_8OC_4H_9$ | 525,8 |
| 29 | $CH_3$ | CN | CN | H | $C_3H_6OC_2H_4O-$ 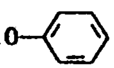 | 528 |
| 30 | $CH_3$ | CN | CN | H | $C_3H_6OCH_2-CH$ $C_2H_5$ $C_4H_9$ | 528 |
| 31 | $CH_3$ | CN | CN | H | 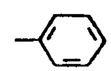 | 538,8 |
| 32 | $CH_3$ | CN | CN | H | 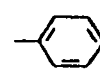 $-OCH_3$ | 547,5 |
| 33 | $CH_3$ | CN | CN | $C_3H_6OCOCH_3$ | 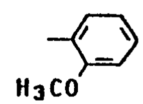 | 547,8 |

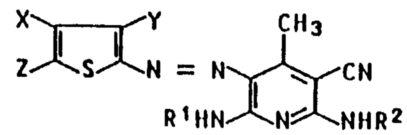

| Bsp.-Nr. | X | Y | Z | $R^1$ | $R^2$ | λ max nm |
|---|---|---|---|---|---|---|
| 34 | $CH_3$ | CN | CN | $C_3H_6OCOCH_3$ | 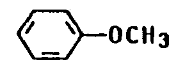 | 553,8 |
| 35 | $CH_3$ | CN | CN | $C_3H_6OCOCH_3$ | 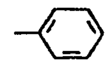 | 546,3 |
| 36 | $CH_3$ | CN | CN | 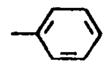 | $C_3H_6OCOCH_3$ | 548,3 |
| 37 | $CH_3$ | CN | CN | 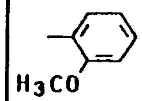 | $C_3H_6OCOCH_3$ | 550,8 |
| 38 | $CH_3$ | CN | CN | 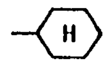 | 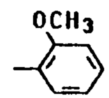 | 549 |
| 39 | $CH_3$ | CN | CN | $C_3H_6OH$ | 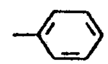 | 549 |
| 40 | $CH_3$ | CN | CN | $C_3H_6OH$ | 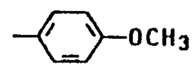 | 554 |
| 41 | $CH_3$ | CN | CN | 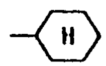 | 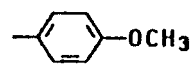 | 555 |
| 42 | $CH_3$ | CN | CN | $C_3H_6OCH_3$ | $C_3H_6OCH_3$ | 534,3 |
| 43 | $CH_3$ | CN | CN | $C_2H_4OCH_3$ | $C_2H_4OCH_3$ | 535,3 |
| 44 | $CH_3$ | $COOC_2H_5$ | CN | H | $C_3H_6OC_2H_4O$ 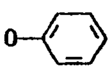 | 524 |

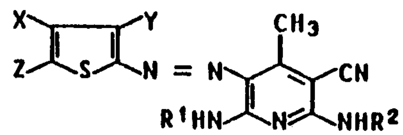

| Bsp.-Nr. | X | Y | Z | $R^1$ | $R^2$ | $\lambda$ max nm |
|---|---|---|---|---|---|---|
| 45 | $CH_3$ | $COOC_2H_5$ | CN | H | 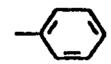 | 532,5 |
| 46 | $CH_3$ | $COOC_2H_5$ | CN | H | 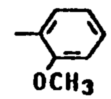 | 534 |
| 47 | $CH_3$ | CN | CN | H | $C_2H_4OC_2H_4OCOC_2H_5$ | 525,8 |
| 48 | $CH_3$ | CN | CN | H | $C_2H_4OC_2H_4OH$ | 527,3 |
| 49 | $CH_3$ | CN | CN | $C_2H_5$ | $C_3H_6OC_4H_8OCOC_2H_5$ | 537,3 |
| 50 | $CH_3$ | CN | CN | $C_2H_5$ | $C_3H_6OC_2H_4OC_4H_9$ | 535,8 |
| 51 | $CH_3$ | CN | CN | $C_2H_5$ | $C_3H_6OC_2H_4OH$ | 535,8 |
| 52 | $CH_3$ | CN | CN | $C_3H_6OCH_3$ | $C_3H_6OC_4H_8OCOCH_3$ | 537,8 |
| 53 | $CH_3$ | CN | CN | $C_3H_6OC_2H_4OCH_3$ | $C_2H_4OH$ | 536,3 |
| 54 | $CH_3$ | CN | CN | $C_3H_6OC_2H_4OCH_3$ | $C_2H_4OCOC_2H_5$ | 535,8 |
| 55 | $CH_3$ | CN | CN | H | $CH(CH_3)CH_2-OCH_3$ | 526,3 |
| 56 | $CH_3$ | CN | CN | $CH(CH_3)_2$ | $C_3H_6OC_4H_8OCOCH_3$ | 537,8 |

| Bsp.-Nr. | X | Y | Z | $R^1$ | $R^2$ | λ max. [nm] (Aceton) |
|---|---|---|---|---|---|---|
| 57 | 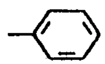 | CN | CN | H | $C_3H_6O(C_2H_4O)_2C_2H_5$ | 523 |
| 58 | $CH_3$ | CN | CN | $C_3H_6OC_4H_8OCOCH_3$ | H | 522 |
| 59 | $CH_3$ | CN | CN | $CH(C_2H_5)CH_2OCOCH_3$ | H | 518 |
| 60 | $CH_3$ | CN | CN | $CH(CH_3)C_2H_4OCOCH_3$ | H | 518 |
| 61 | $CH_3$ | CN | CN | $CH(CH_3)C_3H_6CH(CH_3)_2$ | H | 523 |
| 62 | $CH_3$ | CN | CN | $CH(CH_3)C_3H_6C(CH_3)_2OH$ | H | 522 |
| 63 | $CH_3$ | CN | CN | $C_3H_6OCH(CH_3)CH_2OCH_3$ | H | 522 |
| 64 | $CH_3$ | CN | CN | $C_3H_6OCH_2CH(CH_3)OCH_3$ | H | 523 |
| 65 | $CH_3$ | CN | CN | $C_3H_6O(C_2H_4O)_2C_2H_5$ | H | 522 |

**Patentansprüche**

1. Farbstoffe der Formel I

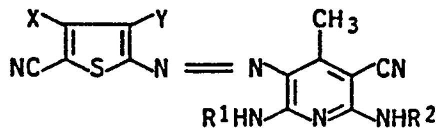

(I),

in der

X Wasserstoff, Methyl oder Phenyl,

Y Cyan oder Carbonester und

$R^1$ und $R^2$ unabhängig voneinander gegebenenfalls durch Sauerstoff unterbrochenes und gegebenenfalls durch Hydroxi, $C_1$- bis $C_8$-Alkanoyloxi, $C_1$- bis $C_4$-Alkoxi, Benzyloxi oder Phenoxi substituiertes $C_2$- bis $C_8$-Alkyl, gegebenenfalls durch Methyl oder Methoxi substituiertes Phenyl oder Cyclohexyl oder einer der beiden Reste $R^1$ und $R^2$ auch Wasserstoff bedeuten.

2. Verwendung der Farbstoffe gemäß Anspruch 1 zum Färben von Polyestern, Polyester/Cellulose Mischgeweben oder Thermoplasten.

**Revendications**

1. Colorants de formule I

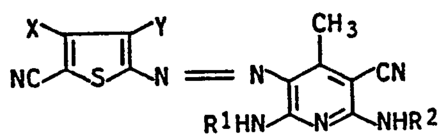

(I),

dans laquelle

X représente un atome d'hydrogène ou un groupement méthyle ou phényle,

Y représente un groupement cyano ou ester carboxylique

$R^1$ et $R^2$ représentent indépendamment l'un de l'autre un groupement alkyle en $C_2$—$C_8$ éventuellement interrompu par de l'oxygène et éventuellement substitué par des radicaux hydroxy, alcanoyloxy en $C_1$—$C_8$, alcoxy en $C_1$—$C_4$, benzyloxy ou phénoxy, un groupement phényle ou cyclohexyle éventuellement substitué par des radicaux méthyle ou méthoxy, ou l'un des deux restes $R^1$ et $R^2$ représente aussi un atome d'hydrogène.

2. Utilisation des colorants selon la revendication 1, pour colorer des polyesters, des tissus mélangés polyester/cellulose ou des matières thermoplastiques.

**Claims**

1. A dye of the formula I

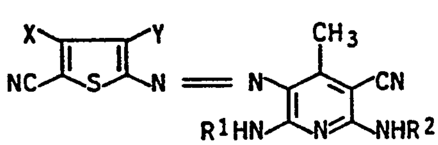

(I),

where X is hydrogen, methyl or phenyl, Y is cyano or a carboxylic ester and $R^1$ and $R^2$ independently of one another are each $C_2$—$C_8$-alkyl which may be interrupted by oxygen and is unsubstituted or substituted by hydroxyl, $C_1$—$C_8$-alkanoyloxy, $C_1$—$C_4$-alkoxy, benzyloxy or phenoxy, or are each cyclohexyl or phenyl which is unsubstituted or substituted by methyl or methoxy or one of the two radicals $R^1$ and $R^2$ is also hydrogen.

2. The use of a dye as claimed in claim 1 for dyeing polyesters, polyester/cellulose blends or thermoplastics.